# EUROPÄISCHE PATENTANMELDUNG

(11) **EP 1 696 002 A1**
(43) Veröffentlichungstag der Anmeldung: **30.08.2006**
(21) Anmeldenummer: 05024413.6
(22) Anmeldetag: 09.11.2005
(51) Int. Cl.: C08L 95/00

(54) **Bitumenmassen umfassend Öle und/oder Fette sowie Wachse**

(30) Priorität: 25.02.2005 DE 202005003108 U
(71) Anmelder: Georg Börner Chemisches Werk für Dach- und Bautenschutz GmbH & Co. KG, 36251 Bad Hersfeld (DE)
(72) Erfinder: Fassbender, Gerhard, Dr., 36251, Bad Hersfeld (DE)
(74) Vertreter: Beckmann, Claus

(57) **Zusammenfassung**

Es werden Bitumenmassen, umfassend (a) Bitumen, (b) mindestens ein tierisches und/oder pflanzliches Öl und/oder Fett und (c) mindestens ein Wachs, beschrieben. Die Bitumenmassen sind geeignet zur Herstellung von Asphaltbelägen im Heißeinbau, in Kaltbauweise, zur Herstellung von Bitumenemulsionen sowie zur Herstellung von Anstrich-, Klebe- und Dichtungsmassen im Ingenieurbau. Die Bitumenmassen können Wachse auf Basis nachwachsender, mineralölbasierter, synthetischer oder montaner Rohstoffe umfassen. Des weiteren werden Additivkonzentrate, die zur Herstellung erfindungsgemäßer Bitumenmassen sowie daraus herstellbarer Produkte verwendet werden können, beschrieben.

## Beschreibung

### Technisches Gebiet der Erfindung

Die vorliegende Erfindung betrifft Bitumenmassen, welche zur Herstellung von Asphaltbelägen im Heißeinbau, in Kaltbauweise, zur Herstellung von Bitumenemulsionen sowie zur Herstellung von Anstrich-, Klebe- und Dichtungsmassen im Ingenieurbau Verwendung finden. Insbesondere betrifft die Erfindung Bitumenmassen, die pflanzliche und/oder tierische Öle und/oder Fette sowie Wachse auf Basis nachwachsender, mineralölbasierter, synthetischer oder montaner Rohstoffe umfassen. Des weiteren betrifft die Erfindung Additivkonzentrate, die zur Herstellung erfindungsgemäßer Bitumenmassen sowie daraus herstellbarer Produkte verwendet werden können.

### Hintergrund der Erfindung

Bitumen spielt als Baustoff, insbesondere im Asphaltstraßenbau und in der Abdichtungstechnik, weltweit eine wichtige Rolle. Grund dafür sind Stoffeigenschaften wie Witterungsbeständigkeit, Chemikalienbeständigkeit, Wasserfestigkeit und -dichtheit, dauerhafte Verklebung mit beispielsweise allen gängigen mineralischen und metallischen Werkstoffen und nicht zuletzt ein hervorragendes Preis-/Leistungsverhältnis.

Ein Nachteil des Bitumens ist allerdings dessen ausgeprägte Temperaturempfindlichkeit. Bitumen ist ein Thermoplast. Dies führt bei Verwendung eines weichen, tieftemperaturflexiblen Bitumentyps im Asphaltstraßenbau im Hochsommer zur Spurrinnenbildung. Wird auf der anderen Seite zur Vermeidung von Spurrinnenbildung ein härteres Bindemittel eingesetzt, kommt es im Winter zu Kontraktionsrissen im Asphaltbelag. Ein Grund für diese Schäden ist die Gebrauchstemperaturspanne von reinem Bitumen, die selbst für gemäßigte Klimaverhältnisse, wie sie in Mitteleuropa vorherrschen, zu gering ist.

### Stand der Technik

Es sind viele Versuche durchgeführt worden, um die Gebrauchstemperaturspanne von Bitumen durch Zugabe von Additiven zu vergrößern. Dabei edangten vor allem polymermodifizierte Bitumina (PmB), welche wesentliche Verbesserungen in der Dauergebrauchstauglichkeit von Asphaltbelägen bewirken, breiteren Eingang in die Praxis. Am meisten verbreitet sind PmB auf Basis von SBS, es finden aber auch Polymerbitumina Verwendung, die unter Verwendung von ABS, NR, SBR, EP(D)M, EVA, EEA, EMA und EBA(-blends), Acrylaten, OCB, AP(A)O und Mischungen dieser Kunststoffe hergestellt werden. Daneben wurden auch verschiedene Recyclingkunststoffe und -kautschuke sowie Mischungen zur Qualitätsverbesserung vorgeschlagen. Beispielsweise wurde Altreifenmehl erfolgreich als Zusatz für im Asphaltstraßenbau verwendetes Bitumen eingesetzt.

Neben positiven Eigenschaften, wie verbesserter Spurrillenresistenz bei gleichzeitig gutem Tieftemperaturverhalten und guter Ermüdungsfestigkeit, bestehen jedoch einige Nachteile, wie beispielsweise die gegenüber unmodifiziertem Bitumen höhere Viskosität solcher PmB. Das führt im Vergleich zu konventionellen Bindemitteln zu einer erhöhten Einbautemperatur und problematischer Verdichtung des Asphaltbelages, damit zu höheren Kosten und nicht zuletzt zu einer erhöhten Belastung von Mensch und Umwelt durch Bitumennebel während der Herstellung und Verarbeitung. Des Weiteren ist der Einsatz von PmB gegenüber dem Einsatz von konventionellem Bitumen mit deutlich höherem Kostenaufwand verbunden, was seiner durchgängigen Verwendung bisher im Wege stand.

Die Forderung nach der Verminderung der Belastung von Mensch und Umwelt durch Bitumendämpfe beim Asphaltstraßenbau führte zur Einführung sogenannter Niedrigtemperaturasphalte. Hierbei werden dem Bindemittel Bitumen in aller Regel Wachse zugesetzt, welche die Viskosität des "Wachsbitumens" oberhalb des Schmelzpunktes der Wachskomponente stark herabsetzen. Dadurch wird die Einbautemperatur des Asphaltes gesenkt und die Emissionen werden vermindert.

Als Wachse werden Montanwachse, Amidwachse, Polyalkylenwachse, oxidierte Polyalkylenwachse und seit Kurzem FT-Wachse (Fischer-Tropsch-Wachse) eingesetzt. Auch Mischungen dieser Wachse sind im Handel erhältlich. Neben der gewünschten Emissionssenkung bei der Verarbeitung zeichnen sich die Asphalte mit "Wachsbitumen" als Bindemittel durch erhöhte Steifigkeit und damit verbesserte Resistenz gegen Spurrinnenbildung aus. Der Einsatz von Wachsbitumen bringt jedoch auch Nachteile, wie beispielsweise eine verminderte Haftung des bituminösen Bindemittels am Splittkorn, eine Verminderung der Kälteflexibilität und eine Verminderung der Ermüdungsfestigkeit, mit sich.

Als weiteres Additiv zur Qualitätsverbesserung von Bitumen werden native Öle und Fette eingesetzt, insbesondere "trocknende" und "halbtrocknende" Öltypen. Diese reagieren mit Luftsauerstoff (sie "verharzen") und bilden dabei zähe, ermüdungsfeste und witterungsbeständige Filme (Firnis) mit sehr guter Substrathaftung. Diese Eigenschaften werden beim Verschneiden mit Bitumen auf das entstandene "Ölbitumen" übertragen und bewirken eine deutliche Qualitätsverbesserung. Insbesondere bei den kalten Asphaltbauweisen mit Bitumenemulsionen fand der sogenannte "Rapsasphalt" zunehmende Anwendung, wohingegen er bei den heißen Asphaltbauweisen bisher selten eingesetzt wurde.

Als Nachteil dieser Modifizierungsvariante wird angeführt, dass der Bindemittelfilm seine Endzähigkeit und -belastbarkeit erst nach einer gewissen Zeit, nämlich nach Beendigung der Verharzung des trocknenden Anteils, erlangt, und daraus beispielsweise gefertigter Asphalt in dieser "Reifezeit" weich und damit anfällig gegen Verformung (Spurrinnenbildung) ist.

Zusammenfassend kann festgehalten werden, dass bei den heißen Asphaltbauweisen Bitumen mit Wachszusatz, Bitumen mit Zusatz nativer Öle oder Fette, Bitumen mit Polymerzusatz (wobei in der Regel mineralölbasierte Öle zur Rheologiekontrolle bei der Herstellung mitverwendet werden) und Bitumen mit Polymerzusatz (wie oben beschrieben) und Wachszusatz als Bindemitteln bekannt sind.

Bei den kalten Asphaltbauweisen sind Bitumenemulsionen mit Zusatz nativer Öle oder Fette, Bitumenemulsionen mit Zusatz von Polymeren (wie oben beschrieben) und Bitumenemulsionen mit Polymer- und Öl-/Fettzusatz im Stand der Technik beschrieben und am Markt erhältlich.

Im Einzelnen sind Polymerbitumen beschrieben z.B. in EP 0 439 232 A1, DE 40 34 319 A1, EP 0 425 151 A1, DE 44 16 567 A1, EP 0 726 294 B1, EP 0 826 736 A1, EP 0 437 167 A1; (Polymer)bitumenemulsionen mit Öl/Fettzusatz sind beschreiben in DE 195 19 539 A1; (Polymer)bitumen mit Öl/Fettzusatz sind beschrieben in EP 0 568 757 A1, EP 1 065 249 A1; Polymerbitumen mit Wachszusatz sind beschrieben in EP 1 452 565 A1.

### Beschreibung der Erfindung

Der vorliegenden Erfindung liegt die Aufgabe zu Grunde, die mit der Modifizierung von Bitumina durch Öle oder Fette einerseits sowie durch Wache andererseits verbundenen Nachteile zu überwinden oder zu mindern.

Der vorliegenden Erfindung liegt insbesondere die Aufgabe zugrunde, neue Bitumenmassen (einschließlich Polymerbitumenmassen) bereitzustellen, welche gute mechanische und/oder thermische Eigenschaften, wie z.B. Steifigkeit, Zähigkeit, Ermüdungsfestigkeit, Versprödungsneigung sowie Erweichungspunkt, Brechpunkt, Kälteflexibilität, bzw. eine bessere Kombination dieser Eigenschaften als bekannte Bitumenmassen aufweisen.

Diese Aufgabe wird durch die Bereitstellung von Bitumenmassen (einschließlich Polymerbitumenmassen) gelöst, die Bitumen (Grundbitumen; einschließlich Polymerbitumen), mindestens ein Öl und/oder Fett auf pflanzlicher und/oder tierischer Basis sowie mindestens ein Wachs umfassen.

Überaschenderweise wurde gefunden, dass sich sowohl die Nachteile der Zugabe von Wachsen bzw. Wachsmischungen, als auch die Nachteile der Zugabe von nativen Ölen und/oder Fetten zu Bitumina dadurch vermeiden lassen, dass man dem Bitumen beide Komponenten im angemessenen Verhältnis zumischt. Dadurch lassen sich Produkte herstellen, die den Ausgangsbitumina (Grundbitumina) in den Qualitätsparametem Steifigkeit/Zähigkeit, gemessen durch den "Erweichungspunkt Ring und Kugel" (EP RuK) und Nadelpenetration (Pen), sowie Kälteflexibilität, gemessen am Brechpunkt nach Fraass (BP Fraass), gleichwertig bzw. überlegen sind.

Überraschenderweise sind die erfindungsgemäßen Bitumenmassen den entsprechenden Grundbitumina im für die Dauerhaftigkeit qualitätsbestimmenden Parameter Ermüdungsfestigkeit überlegen, der Mischung mit Wachszusatz sogar deutlich überlegen, wobei sie nahezu das sehr hohe Niveau der Mischungen mit alleinigem Zusatz nativer Öle erreichen, ohne die als nachteilig angesehene Erweichung zu zeigen.

Besonders überraschend wurde gefunden, dass die Versprödungsneigung durch Alterung, die allen Bitumina zu eigen ist, bei den erfindungsgemäßen Bitumenmassen nicht nur die Grundbitumina deutlich sowie die Abmischungen mit Wachs sehr deutlich übertrifft, sondern auch hier nahezu das Niveau der Mischungen mit Zusatz nativer Öle bzw.

Fette erreicht, wie ein Vergleich der Brechpunkte sowie der Ermüdungsfestigkeiten verdeutlicht.

Insbesondere bei erfindungsgemäßen Polymerbitumenmassen wurde überraschend festgestellt, dass diese heißlagerstabil sind, auch nach Alterung gute elastischen Rückstellungen aufweisen und auch bei niedriger Temperatur und nach Wärmealterung noch ausreichende Elastizität besitzen.

Die vorliegende Erfindung betrifft Bitumenmassen, die Bitumen (Grundbitumen), mindestens ein Öl und/oder Fett auf pflanzlicher und/oder tierischer Basis, sowie mindestens ein Wachs umfassen.

Das Grundbitumen kann insbesondere ausgewählt sein aus Straßenbaubitumen nach EN 12591, Polymerbitumen nach TL PM(o)B, Hartbitumen, oxidiertem Bitumen (Industriebitumen), Extraktionsbitumen, Naturasphalten sowie Fällungsbitumen (Propan-, Butanbitumen). Besonders bevorzugt sind Bitumina (einschließlich Polymerbitumina), gekennzeichnet durch eine Nadelpenetration von 20 bis 200 mm /10, insbesondere von > 50 mm/10, gemessen nach DIN EN 1426. Das Grundbitumen kann auch ein Gemisch der genannten Bitumina sein. Unter Bitumen bzw. Bitumenmassen sind somit insbesondere Polymerbitumen bzw. Polymerbitumenmassen zu verstehen.

Die erfindungsgemäßen Bitumenmassen enthalten mindestens ein tierisches und/oder pflanzliches Öl und/oder mindestens ein tierisches und/oder pflanzliches Fett. Solche tierischen oder pflanzlichen Öle bzw. Fette werden auch als native Öle bzw. Fette bezeichnet. Grundsätzlich können alle nativen Öle oder Fette oder Mischungen davon verwendet werden.

Zu den in den erfindungsgemäßen Bitumenmassen einsetzbaren pflanzlichen Ölen, die bei Raumtemperatur überwiegend flüssig sind, zählen z.B. Holzöl, Kokosöl, Leinöl, Olivenöl, Palmöl, Rapsöl, Rizinusöl, Distelöl, Nussöle wie z.B. Purgiernussöl, Keimöle, Sonnenblumenöl, Sojaöl, Tallöl und dergleichen sowie Derivate davon. Zu den erfindungsgemäß einsetzbaren tierischen Ölen zählen beispielsweise Fischöle wie Heringsöl und Menhadenöl, Klauenöl, Knochenöl, Lardöl, Lebertran und dergleichen sowie Derivate davon. Gebrauchte und regenerierte Speiseöle und -fette können ebenso vorteilhaft eingesetzt werden. Selbst Rückstände aus der Öl- oder Fettaufbereitung sind einsetzbar.

Zu den in den erfindungsgemäßen Bitumenmassen einsetzbaren Fetten, die bei Raumtemperatur überwiegend fest oder pastös sind, zählen z.B. Stillingiafett, Sheabutter, Palmbutter, Rindertalg, Schweineschmalz und Butterfett sowie Derivate davon.

Besonders bevorzugte Öle sind Rapsöl, Sonnenblumenöl, Sojaöl, Purgiernussöl, Tallöl, Gemische daraus sowie Regenerate/Redestillate von gebrauchten Speiseölen oder -fetten sowie Gemische davon.

Unter einem Derivat eines nativen Öls bzw. Fetts ist in diesem Zusammenhang allgemein eine (chemisch) veränderte Substanz auf der Basis des Öls bzw. Fetts zu verstehen, z.B. ein gehärtetes Öl bzw. Fett, ein Veresterungs- oder Umesterungsprodukt, ein aus dem Öl bzw. Fett gebildetes Alkydharz oder ein epoxydiertes Öl bzw. Fett.

Zu den in den erfindungsgemäßen Bitumenmassen einsetzbaren Wachsen gehören Wachse auf Basis nachwachsender, synthetischer, mineralölbasierter und montaner Rohstoffe oder Mischungen daraus. Zu den erfindungsgemäß verwendbaren natürlichen bzw. nachwachsenden Wachsen gehören insbesondere Bienenwachs, Schellackwachs, Carnaubawachs, oder Candellilawachs. Als synthetische Wachse sind insbesondere Polyalkenwachse, oxidierte Polyalkenwachse, Polyalkencopolymerwachse, Amidwachse oder FT-Wachse (Fischer-Tropsch-Wachse, auch Sasolwachse genannt; dabei handelt es sich um Gemische von Paraffinen mit Kohlenstoff-Kettenlängen im Bereich von ca. C₂₀-C₁₂₀, bevorzugt ca. C₂₅-C₁₀₀, am meisten bevorzugt ca. C₂₅-C₄₀) einsetzbar. Des Weiteren sind beispielsweise Mineralwachse wie Ceresin oder Ozokerit, Petrowachse wie Paraffin oder Petrolatum, und Montanwachse vorteilhaft einsetzbar. Ebenso sind chemisch modifizierte Abkömmlinge oben genannter Wachsfamilien wie z.B. Montanesterwachse oder hydrierte Jojobawachse verwendbar. Nicht zuletzt können sogenannte Regeneratwachse aus dem Kunststoffrecycling vorteilhaft eingesetzt werden.

Der Anteil des Bitumens (bzw. Polymerbitumens) in der erfindungsgemäßen Bitumenmasse beträgt bevorzugt 35 bis 99,5 Gew.-% bezogen auf das Gesamtgewicht der Bitumenmasse.

Der Anteil des mindestens einen tierischen und/oder pflanzlichen Öls oder Fetts in der erfindungsgemäßen Bitumenmasse beträgt bevorzugt 0,5 bis 50 Gew.-% bezogen auf das Gesamtgewicht der Bitumenmasse.

Der Anteil des mindestens einen Wachses in der erfindungsgemäßen Bitumenmasse beträgt bevorzugt 0,1 bis 15 Gew.-% bezogen auf das Gesamtgewicht der Bitumenmasse.

Die erfindungsgemäßen Bitumenmassen können zusätzlich Haftvermittler, Netzmittel, Alterungsschutzmittel, Fasern, armierende Feinfüller, Reaktionsbeschleuniger, Sikkative, Polymere, Vemetzungskatalysatoren, Korrosionsschutzadditive und/oder UV Stabilisatoren enthalten.

Die erfindungsgemäßen Bitumenmassen sind beispielsweise zur Herstellung von Asphaltmischgut, Bitumenemulsionen, Kaltmischgut, Dicht-, Klebe- und Spachtelmassen, Fugenbändem und -vergussmassen, Schienenuntergussmassen, Tankbeschichtungen und Korrosionsschutzbeschichtungen geeignet.

In einer weiteren Ausführungsform betrifft die Erfindung Additivkonzentrate zur Herstellung der erfindungsgemäßen Bitumenmassen sowie daraus herstellbarer Produkte umfassend (a) mindestens ein tierisches und/oder pflanzliches Öl und/oder Fett und (b) mindestens ein Wachs. Die erfindungsgemäßen Additivkonzentrate können den entsprechenden Ausgangsbitumina beispielsweise bei der Asphalt- bzw. Emulsionsherstellung im erforderlichen Umfang zugemischt werden.

Diese Additivkonzentrate bzw. Additivcompounds können als Pellets in fester Form oder aber in heißflüssiger Form, z.B. bei der Herstellung von Asphaltmischgut, eingesetzt werden. Die Bereitstellung solcher Additive hat beispielsweise für die Betreiber von Asphaltmischanlagen oder Emulsionsanlagen den Vorteil, dass bei nur gelegentlichem Einsatz der erfindungsgemäßen Bitumenmassen handelsübliche Standardbitumen zur erfindungsgemäßen Asphalt- bzw. Bitumenemulsionsherstellung eingesetzt werden können. Hier können die erfindungsgemäßen Additivkonzentrate im erforderlichen Umfang zugemischt werden. Der Additivkonzentratzusatz kann sowohl heißflüssig (bei der Emulsionsherstellung bevorzugt) als auch in Pellet- oder Schuppenform kalt (bei der Asphaltherstellung bevorzugt) erfolgen. Die separate Bevorratung der erfindungsgemäßen Bitumenmassen kann entfallen. Des Weiteren können den Additivkonzentraten zusätzlich weitere zur Herstellung benötigte Komponenten, wie z.B. Haftvermittler, Netzmittel, Alterungsschutzmittel, Fasem, armierende Feinfüller, Reaktionsbeschleuniger, Sikkative, Polymere, Vemetzungskatalysatoren, Korrosionsschutzadditive und/oder UV Stabilisatoren zugefügt werden.

Weitere Ausführungsformen der Erfindung betreffen beispielsweise Bitumenemulsionen nach DIN 1995 oder nach DIN 18195, Asphaltmassen wie Gussasphalt, Asphaltbeton

Splittmastixasphalt, Sandasphalt, Asphaltmastix, etc., und Kaltmischgut umfassend erfindungsgemäße Bitumenmassen. Hierbei können erfindungsgemäße Bitumenmassen beispielsweise unter Einsatz erfindungsgemäßer Additivkonzentrate hergestellt werden.

### Beispiel

Nachfolgend wird die Erfindung anhand von Beispielen und Vergleichsbeispielen veranschaulicht, die jedoch nicht dazu beabsichtigt sind, den Bereich der Erfindung in irgendeiner Weise einzuschränken.

Die Materialprüfungen wurden nach folgenden Normen und Vorschriften durchgeführt:
- Erweichungspunkt Ring und Kugel (EP RuK; "RuK"): DIN EN 1427
- Nadelpenetration ("Pen"): DIN EN 1426
- Brechpunkt nach Fraass ("BP Fraass"): DIN EN 12593
- Elastische Rückstellung: DIN V 52021
- Heißlagerstabilität (Entmischungsneigung): DIN EN 1427, Anhang A
- Viskosität: prEN 14896
- Ermüdungsfestigkeit: nach Schmidt / Louis: "Bewertung des Ermüdungsverhaltens polymermodifizierter Bitumen", Heft 663 der Reihe "Forschung Straßenbau und Straßenverkehrstechnik", FGSV-Verlag, 1993
- Wärmealterung: DIN EN 12607-2. Abweichend von der Normvorschrift erfolgte die thermische Alterung durch Lagerung in einem Umluftwärmeschrank bei 50°C und 2-fachem Luftaustausch pro Stunde über einen Zeitraum von 28 Tagen

Die Prozentangaben beziehen sich jeweils auf das Gewicht (bezogen auf das Gesamtgewicht der Bitumenmasse).

### Beispiel 1: Weiches Bitumen mit Öl- und Wachszusatz

Als Ausgangsbitumen (Grundbitumen) wurde Bitumen 70-100 nach EN 12591 eingesetzt ("Bitumen A"; "Bit. A"). Aus Gründen der Vergleichbarkeit wurde bei allen Versuchen Rapsöl als natives Öl/Fett eingesetzt. Als Wachs wurde ein FT-Wachs (auch Sasolwachs genannt) verwendet, welches unter dem Handelsnamen "Sasobit® " vertrieben wird. Dieses ist ein Gemisch langkettiger Kohlenwasserstoffe (C₄₀-C₁₁₅-Alkane) der Fischer-Tropsch-Synthese, das frei von Aschebildnern (Metallen) ist und das keine Heteroatome wie Chlor, Schwefel, Stickstoff und Sauerstoff enthält.

Die Zusammensetzungen und die gemessenen Eigenschaften der erfindungsgemäßen Bitumenmasse (Beispiel 1) und der zum Vergleich hergestellten Bitumenmassen (Vergleichsbeispiele 1a bis 1c) sind in Tabelle 1A angegeben.

**Tabelle 1A**

| | | **RuK** | **Pen (25°C)** | **BP Fraass** | **Ermüdungsfestigkeit** | |
|---|---|---|---|---|---|---|
| | | | | | Biegezyklen | |
| | | | | | -10°C | -15°C |
| **Beispiel 1** Bit. A + Wachs + Rapsöl | 94% / 2% / 4% | 46°C | 104 mm/10 | - 19°C | | 3765 |
| **Vergleichsbeispiel 1a** Bitumen A | 100% | 45°C | 87 mm/10 | - 19°C | 4075 | 2926 |
| **Vergleichsbeispiel 1b** Bit. A + Rapsöl | 96% / 4% | 37°C | 214 mm/10 | -19°C | | 5337 |
| **Vergleichsbeispiel 1c** Bit. A + Wachs | 98,25% /1,75% | 55°C | 45 mm/10 | -18°C | 413 | 1 |

Wie den Ergebnissen aus Tabelle 1A zu entnehmen ist, zeigt das Produkt des Vergleichsbeispiels 1 b gegenüber dem Grundbitumen (Vergleichsbeispiel 1a) eine deutliche Erhöhung der Ermüdungsfestigkeit bei gleicher Kälteflexibilität. Allerdings ist die Mischung gegenüber der aus Vergleichsbeispiel 1a deutlich weicher. Die Mischung des Vergleichsbeispiels 1 c ist gegenüber Vergleichsbeispiel 1a bei gleicher Kälteflexibilität zwar deutlich härter, zeigt jedoch nur ca. 10% der Ermüdungsfestigkeit von Vergleichsbeispiel 1a, und zwar auf dem niedrigen Temperatumiveau von -10°C.

Die erfindungsgemäße Mischung aus Beispiel 1 weist eine verbesserte Ermüdungsfestigkeit gegenüber Vergleichsbeispiel 1a auf, wobei beide bezüglich der anderen Eigenschaften (RuK, Pen, BP Fraass) vergleichbar sind. Des weiteren weist die Mischung aus Beispiel 1 gegenüber Vergleichsbeispiel 1c eine stark verbesserte Ermüdungsfestigkeit auf.

Bei den rheologiebestimmenden Bitumenkennwerten RuK und Pen (25°C) sind z.T. deutliche Unterschiede messbar. Die Mischung des Vergleichsbeispiels 1 b ist gegenüber dem Ausgangsbitumen (Vergleichsbeispiel 1a) deutlich weicher; die Mischung des Vergleichsbeispiels 1c deutlich härter. Die erfindungsgemäße Zusammensetzung (Beispiel 1) erreicht das Steifigkeitsniveau des Ausgangsbitumens. Der Kennwert BP Fraass (Kälteflexibilität) ist bei allen Mischungen im Rahmen der Messunsicherheit vergleichbar. Bei der Ermüdungsfestigkeit zeigt die Mischung des Vergleichsbeispiels 1 b gegenüber dem Ausgangsbitumen eine deutliche Verbesserung, ebenso die erfindungsgemäße Zusammensetzung (Beispiel 1). Die Mischung des Vergleichsbeispiels 1 c zeigt im Vergleich drastische Einbußen im Ermüdungsverhalten.

Die Eigenschaften der in Tabelle 1A angegebenen Bitumenmassen nach 28-tägiger Wärmealterung sind in Tabelle 1 B angegeben.

**Tabelle 1 B**

| | | **RuK** | **Pen 25°C** | **BP Fraass** | **Ermüdungsfestigkeit** | |
|---|---|---|---|---|---|---|
| | | | | | Biegezyklen | |
| | | | | | -10°C - | 15°C |
| **Beispiel 1a** Bit. A+ Wachs + Rapsöl | 94% / 2% / 4% | 50°C | 77 mm/10 | - 18°C | | 2093 (55,6%) |
| **Vergleichsbeispiel 1aa** Bitumen A | 100% | 51 °C | 53 mm/10 | - 14°C | 897 (22%) | 1 |
| **Vergleichsbeispiel 1ba** Bit. A + Rapsöl | 96% /4% | 42°C | 127 mm/10 | - 20°C | | 2454 (46%) |
| **Vergleichsbeispiel 1ca** Bit. A + Wachs | 98,25% /1,75% | 58°C | 33 mm/10 - | 12°C | 71 (17,2%) | 1 |

Wie den Daten aus Tabelle 1 B zu entnehmen ist, lässt sich nach der Wärmealterung bei allen Mischungen eine wesentliche Verhärtung/Versteifung, angezeigt durch steigenden EP RuK und fallende Pen (25°C), feststellen. Erstaunlicherweise zeigen dabei die Mischungen des Vergleichsbeispiels 1 ba und die erfindungsgemäße Mischung aus Beispiel 1 a kein signifikantes Nachlassen in der Kälteflexibilität. Im Gegensatz dazu lassen die Mischungen aus den Vergleichsbeispielen 1 aa und 1 ca bzgl. der Kälteflexibilität merklich bzw. stark nach. Beim Ermüdungsverhalten erreichen die Proben aus Vergleichsbeispielen 1 aa und 1 ca auf dem niedrigen Temperatumiveau von -10°C nur 22% bzw. 17,2% des Wertes bei neuem Material. Die Proben aus dem erfindungsgemäßen Beispiel (Beispiel 1 a) sowie aus Vergleichsbeispiel 1ba erreichen nach Alterung dagegen noch 55,6% bzw. 46% des Ausgangswertes. Besonders bemerkenswert ist die Tatsache, dass der Absolutwert der erfindungsgemäßen Probe aus Beispiel 1a das Niveau der Probe aus Vergleichsbeispiel 1ba nahezu erreicht.

### Beispiel 2: Hartes Bitumen mit Öl- und Wachszusatz

Bei dieser Vergleichsuntersuchung wurde ein hartes Ausgangsbitumen (Bitumen 20-30; "Bitumen B", "Bit. B") gewählt und im Vergleich zur Vergleichsuntersuchung in Beispiel 1 der Anteil an nativem Öl verdoppelt.

Die Zusammensetzungen und die gemessenen Eigenschaften der erfindungsgemäßen Bitumenmasse (Beispiel 2) und der zum Vergleich hergestellten Bitumenmassen (Vergleichsbeispiele 2a bis 2c) sind in Tabelle 2A angegeben.

**Tabelle 2A**

| | | **RuK** | **Pen(25°C)** | **BP Fraass** | **Ermüdungsfestigkeit** | |
|---|---|---|---|---|---|---|
| | | | | | Biegezyklen | |
| | | | | | -15°C | -2°C |
| **Beispiel 2** Bit. B + Wachs + Rapsöl | 90% / 2% / 8% | 47°C | 99 mm/10 | - 18°C | 608 | |
| **Vergleichsbeispiel 2a** Bitumen B | 100% | 59°C | 21 mm/10 | - 7°C | | 890 |
| **Vergleichsbeispiel 2b** Bit. B + Wachs | 98,25% / 1,75% | 66°C | 17 mm/10 | - 4°C | | 382 |
| **Vergleichsbeispiel 2c** Bit. B + Rapsöl | 92% / 8% | 44°C | 109 mm/10 | -19°C | 890 | |

Die Eigenschaften der in Tabelle 2A angegebenen Bitumenmassen nach 28-tägiger Wärmealterung sind in Tabelle 2B angegeben.

**Tabelle 2B**

| | | **RuK** | **Pen (25°C)** | **BP Fraass** | **Ermüdungsfestigkeit** | |
|---|---|---|---|---|---|---|
| | | | | | Biegezyklen | |
| | | | | | -15°C | - 2°C |
| **Beispiel 2a** Bit. B + Wachs + Rapsöl | 90% / 2% / 8% | 53°C | 49 mm/10 | - 19°C | 443 (73%) (73%) | |
| **Vergleichsbeispiel 2aa** Bitumen B | 100% | 61°C | 16 mm/10 | - 5°C | | 259 (29,1%) |
| **Vergleichsbeispiel 2ba** Bit. B + Wachs | 98,25% / 1,75% | 68°C | 14 mm/10 | - 3°C | | 109 (28,5%) |
| **Vergleichsbeispiel 2ca** Bit. B + Rapsöl | 92% / 8% | 47°C | 54 mm/10 | - 22°C | 601 (67,5%) | |

Die Ergebnisse in den Tabellen 2A und 2B zeigen prinzipiell die gleichen Tendenzen wie bei Beispiel 1; hier zeigt sich jedoch noch deutlicher der günstige Einfluss der erfindungsgemäßen Additivkombination aus Wachs und nativem Öl, und zwar insbesondere nach Alterung:
- Ausreichende Steifigkeit schon im Neuzustand
- Ausgezeichnete Kälteflexibilität (die bei der erfindungsgemäßen Zusammensetzung (Beispiel 2 bzw. 2a) nach Alterung sogar zunimmt!)
- Ausgezeichnetes Ermüdungsverhalten, auch nach Alterung (die erfindungsgemäße Zusammensetzung erreichet nach Alterung noch 73% der ursprünglichen Ermüdungsfestigkeit, gegenüber nur 29% bei den Mischungen der Vergleichsbeispiele)

### Beispiel 3: Weiches Polymerbitumen mit Öl- und Wachszusatz

Analog Beispiel 1 und 2 wurden die Eigenschaften von weichem Polymerbitumen (PmB 130; "PmB A") mit Zusatz von Wachs und/oder nativem Öl untersucht. Die Ergebnisse vor und nach 28-tägiger Alterung sind in den Tabellen 3A bzw. 3B angegeben.

### Beispiel 4: Hartes Polymerbitumen mit Öl- und Wachszusatz

Analog Beispiel 1 und 2 wurden die Eigenschaften von hartem Polymerbitumen (PmB 45; "PmB B") mit Zusatz von Wachs und/oder nativem Öl untersucht. Die Ergebnisse vor und nach 28-tägiger Alterung sind in den Tabellen 4A bzw. 4B angegeben.

Die Ergebnisse in den Tabellen 3A, 3B, 4A und 4B zeigen ebenfalls die erstaunlichen Verbesserungen der erfindungsgemäßen Zusammensetzungen, wobei zusätzlich zu den vorteilhaften Effekten, die schon bei den Beispielen 1 und 2 beobachtet wurden, erstaunlicherweise folgendes festgestellt werden konnte:
- Die erfindungsgemäßen Mischungen sind trotz der "artfremden" Zusätze heißlagerstabil.
- Die elastischen Rückstellungen sind im Vergleich zum Stand der Technik gleich gut oder besser, auch nach Alterung. Dies ist erstaunlich, wenn man folgendes berücksichtigt: Die Elastizität eines Polymerbitumens ist eine direkte Funktion des Kunststoffgehaltes; sie sollte also bei Verdünnung mit nicht elastischen Stoffen messbar abnehmen, wie die Zusammensetzungen der Vergleichsbeispiele 3b und 4b im Vergleich zu den unverschnittenen Polymerbitumina der Vergleichsbeispiele 3a und 4a auch beispielhaft zeigen. Die erfindungsgemäßen Zusammensetzungen zeigen diesen Verdünnungseffekt nicht, die gemessenen Werte der elastischen Rückstellung sind teilweise sogar etwas besser, und das trotz einer im Vergleich zu beispielsweise den Mischungen der Vergleichsbeispiele 3b und 4b deutlich höheren Verdünnungsrate.
- Bei den erfindungsgemäßen Zusammensetzungen der Beispiele 3 und 4 ist im Gegensatz zu den Vergleichsbeispielen nach dem Stand der Technik auch bei niedriger Temperatur noch ausreichende Elastizität gegeben, um eine Messung der elastischen Rückstellung zuzulassen. Dies gilt ebenfalls für die Proben nach Wärmealterung. Die Zusammensetzungen nach dem Stand der Technik reißen bei 7°C beim Versuch, sie auf die zur Prüfung notwendige Ausgangslänge zu dehnen.

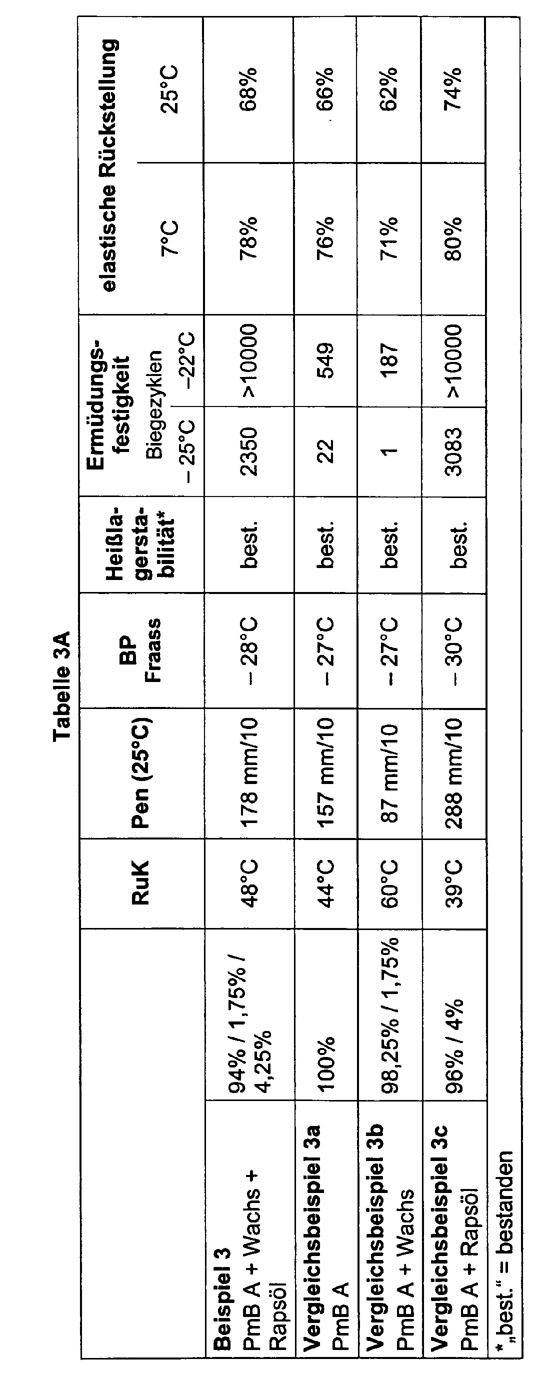

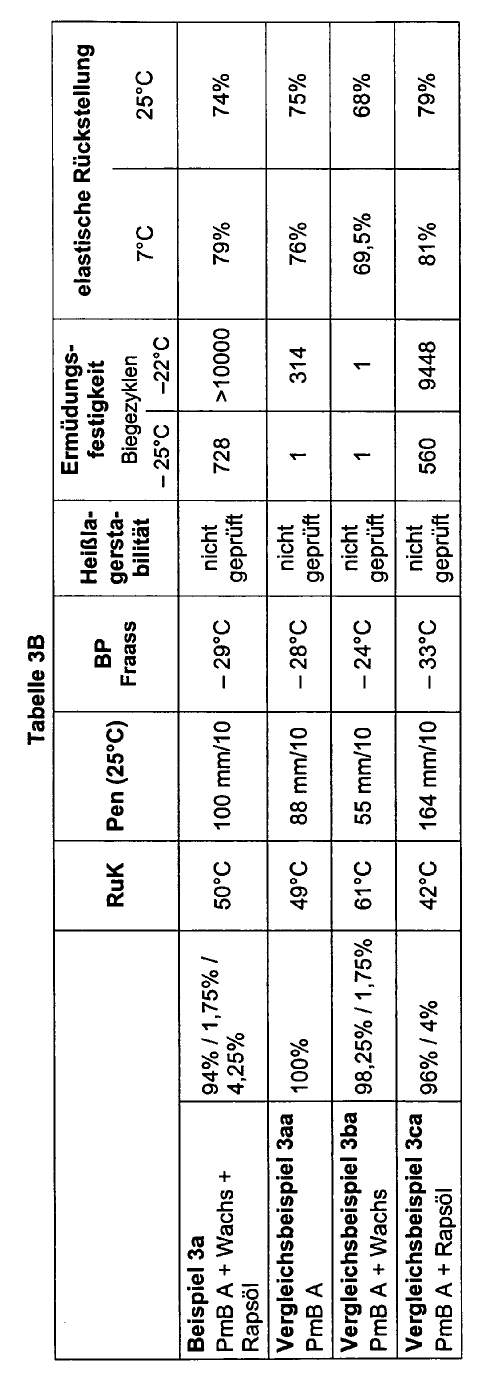

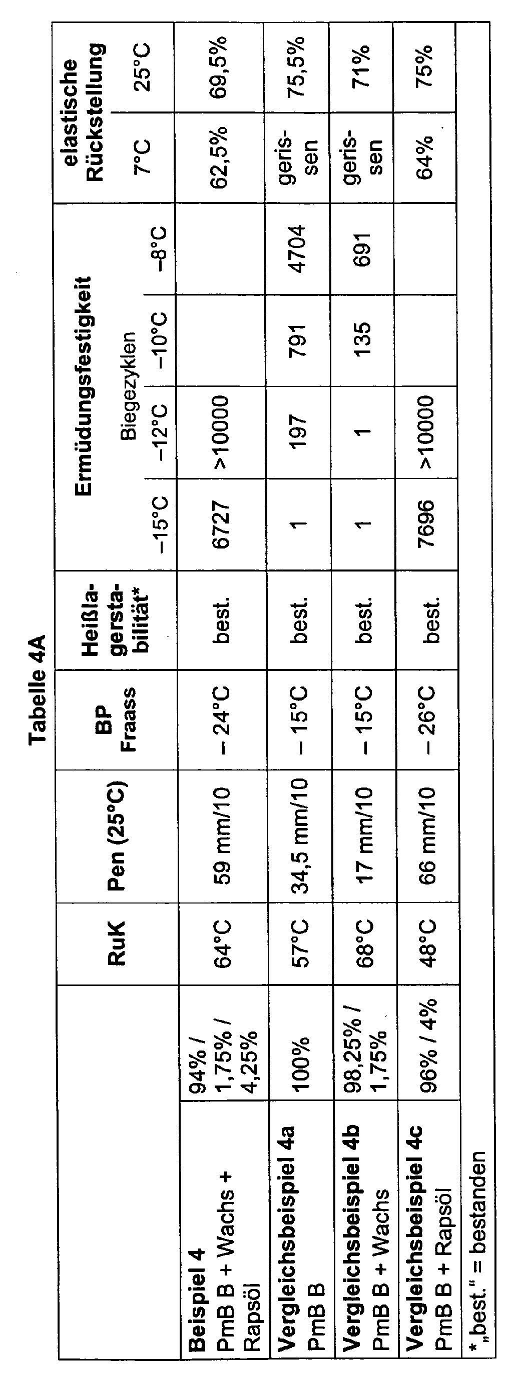

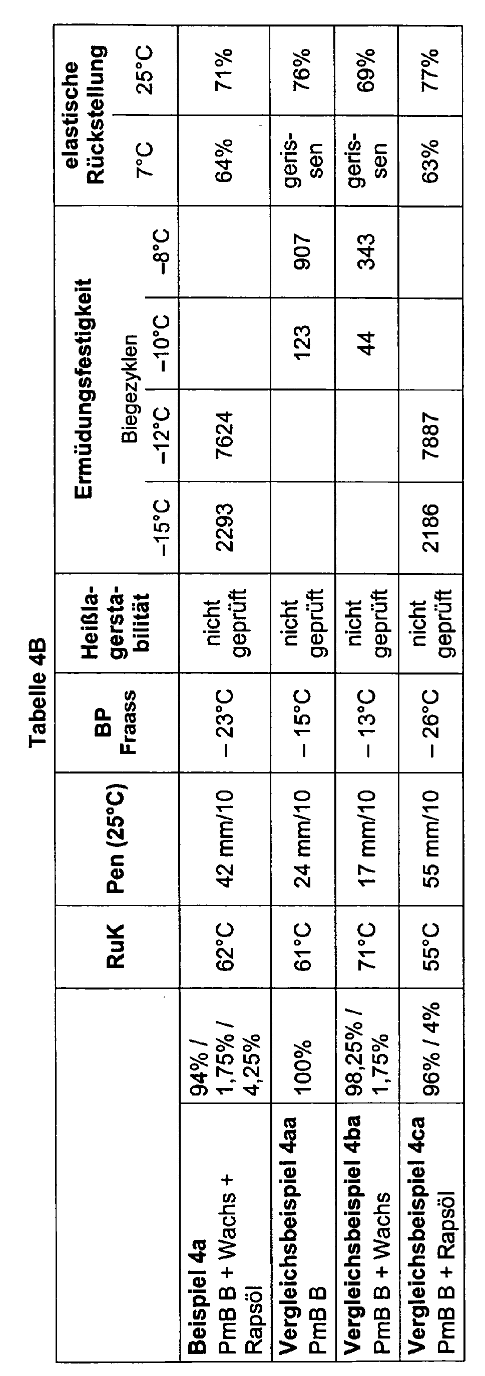

Aus den voranstehenden Ergebnissen lässt sich ableiten, dass sich mit den erfindungsgemäßen Zusammensetzungen Asphaltmischungen, Bitumenemulsionen, Bautenschutzprodukte etc. formulieren lassen, welche die Vorteile von Öl- und Wachszusätzen zu Bitumen vereinen, ohne dass die Nachteile der einzelnen Additive spürbar werden.

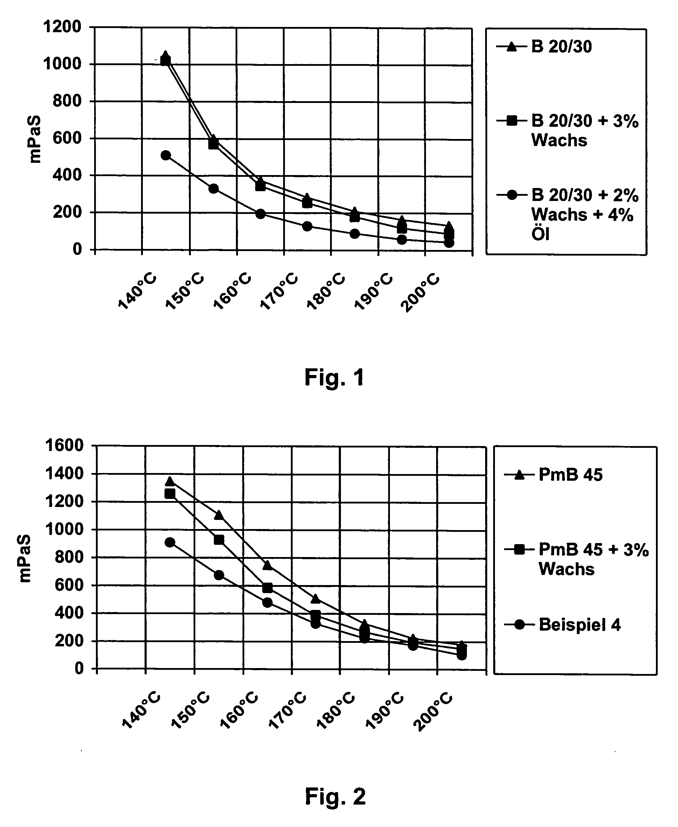

Ebenso lassen sich mit den erfindungsgemäßen Zusammensetzungen Niedrigtemperaturasphalte, wie sie heute gefordert werden, herstellen. Dies wird insbesondere durch die Figuren 1 und 2 beispielhaft verdeutlicht. Diese zeigen die deutliche Viskositätserniedrigung, sowohl im Vergleich zum unmodifizierten als auch im Vergleich zum nur mit Wachs modifizierten (Polymer-)bitumen.

### Beispiel 5: Additivkonzentrate aus Öl/Fett und Wachs

Nachfolgend sind Formulierungsbeispiele für erfindungsgemäße Additivkonzentrate angegeben:
5a) Additivkonzentrat

| | |
|---|---|
| Natives Öl / Fett, z.B. Rapsöl: | 65% |
| Wachs, z.B. FT-Wachs: | 35% |

5b) Additivkonzentrat

| | |
|---|---|
| Cellulosefaser oder gefällte/geblasene Kieselsäure: | 65% |
| Rapsöl: | 24% |
| FT-Wachs: | 11 % |

### Beispiel 6: Asphalt- bzw. Emulsionsherstellung unter Verwendung erfindungsgemäßer Bitumenmassen

Die folgenden Formulierungsbeispiele beschreiben die Verwendung erfindungsgemäßer Bitumenmassen bzw. erfindungsgemäßer Additivkonzentrate zur Herstellung von Bitumenemulsionen nach DIN 1995 (für Oberflächenbehandlungen) bzw. nach DIN 19195 (zur Abdichtung von Ingenieurbauwerken), für Heißasphalt wie Asphaltbeton bzw. Splittmastmixasphalt oder Kaltmischgut. Die Herstellung der genannten Produkte ist dem Fachmann an sich bekannt.
6a) Bitumenemulsion, kationisch, nach DIN 1995, Teil 3

| | |
|---|---|
| Erfindungsgemäße Bitumenmasse: | 60% |
| Emulgator Talgfettsäurediamin: | 0,2% |
| Salzsäure, 15%: | 0,15% |
| Wasser: | ad 100% |

6b) Bitumenemulsion, anionisch, nach DIN 18195, Teil 2

| | |
|---|---|
| Bitumen 70-100 nach EN 12591: | 56,4% |
| Erfindungsgemäßes Additiv nach Bsp. 5a: | 3,6% |
| Emulgator Tallöldestillat: | 0,5% |
| Kalilauge (KOH) 20%: | 0,38% |
| Wasser: | ad 100% |

6c) Asphaltbeton 0/8 nach ZTV Asphalt-StB 01

| | |
|---|---|
| Mineralgemisch 0-8 mm: | 93% |
| Erfindungsgemäße Bitumenmasse: | 7% |

6d) Splittmastixasphalt 0/5 nach ZTV Asphalt-StB 01

| | |
|---|---|
| Mineralgemisch 0-5 mm: | 91,5% |
| Bitumen 70-100 nach EN 12591: | 7% |
| Erfindungsgemäßes Additivkonzentrat nach Bsp. 5b: | 1,5% |

6e) Verschnittbitumen für Kaltmischgut (vorzugsweise verwendet zum schnellen Beseitigen von Straßenschäden)

| | |
|---|---|
| Bitumen 70/100: | 78-90% |
| FT-Wachs: | 2% |
| Rapsöl: | 10% |
| RME (Biodiesel): | 0 -10% (fakultativ) |

6f) Kaltmischgut:

| | |
|---|---|
| Mineralgemisch 2/5 mm nach TL Min Stb. 2000: | 94% |
| Verschnittbitumen nach Bsp. 6e: | 6% |

Dieses Kaltmischgut hat gegenüber herkömmlichen Produkten den Vorteil sehr hoher Dauerhaftigkeit bei guter Anfangssteifigkeit.

## Patentansprüche

1. Bitumenmasse, umfassend
(a) Bitumen,
(b) mindestens ein tierisches und/oder pflanzliches Öl und/oder Fett und
(c) mindestens ein Wachs.

2. Bitumenmasse nach Anspruch 1, wobei das Bitumen ausgewählt ist aus Stra-βenbaubitumen, Polymerbitumen, Hartbitumen, oxidiertem Bitumen, Extraktionsbitumen, Naturasphalten sowie Fällungsbitumen sowie Gemischen daraus.

3. Bitumenmasse nach einem der vorangehenden Ansprüche, wobei das mindestens eine tierische und/oder pflanzliche Öl und/oder Fett ausgewählt ist aus Holzöl, Kokosöl, Leinöl, Olivenöl, Palmöl, Rapsöl, Rizinusöl, Distelöl, Nussölen, Keimölen, Sonnenblumenöl, Sojaöl, Tallöl, Fischölen, wie Heringsöl und Menhadenöl, Klauenöl, Knochenöl, Lardöl, Lebertran, Purgiernussöl, Stillingiafett, Sheabutter, Palmbutter, Rindertalg, Schweineschmalz, Butterfett, Regeneraten/Redestillaten von gebrauchten Speiseölen oder -fetten sowie Gemischen oder Derivaten davon.

4. Bitumenmasse nach einem der vorangehenden Ansprüche, wobei das mindestens eine Wachs ausgewählt ist aus natürlichen bzw. nachwachsenden Wachsen, wie Bienenwachs, Schellackwachs, Camaubawachs, oder Candellilawachs; synthetischen Wachsen, wie Polyalkenwachse, oxidierte Polyalkenwachse, Polyalkencopolymerwachse, Amidwachse oder FT-Wachse; Mineralwachsen, wie Ceresin oder Ozokerit; Petrowachsen, wie Paraffin oder Petrolatum; Montanwachsen; Regeneratwachsen; sowie chemisch modifizierten Abkömmlingen davon, wie Montanesterwachse oder hydrierte Jojobawachse.

5. Bitumenmasse nach einem der vorangehenden Ansprüche, wobei der Anteil des Bitumen im Bereich von 35 bis 99,5 Gew.-%, bezogen auf das Gesamtgewicht der Bitumenmasse, liegt.

6. Bitumenmasse nach einem der vorangehenden Ansprüche, wobei der Anteil des mindestens einen tierischen und/oder pflanzlichen Öls und/oder Fettes im Bereich von 0,5 bis 50 Gew.-%, bezogen auf das Gesamtgewicht der Bitumenmasse, liegt.

7. Bitumenmasse nach einem der vorangehenden Ansprüche, wobei der Anteil des mindestens einen Wachses im Bereich von 0,1 bis 15 Gew-%, bezogen auf das Gesamtgewicht der Bitumenmasse, liegt.

8. Bitumenmasse nach einem der vorangehenden Ansprüche, zusätzlich umfassend eine oder mehrere Komponenten ausgewählt aus der Gruppe bestehend aus Haftvermittlern, Netzmitteln, Alterungsschutzmitteln, Fasem, armierenden Feinfüllern, Reaktionsbeschleunigern, Sikkativen, Vemetzungskatalysatoren, Korrosionsschutzadditiven und UV Stabilisatoren.

9. Verwendung einer Bitumenmasse nach einem der vorangehenden Ansprüche zur Herstellung von Asphaltmischgut, Bitumenemulsionen, Kaltmischgut, Dicht-, Klebe- und Spachtelmassen, Fugenbändem und -vergussmassen, Schienenuntergussmassen, Tankbeschichtungen oder Korrosionsschutzbeschichtungen.

10. Bitumenemulsion, umfassend eine Bitumenmasse nach einem der Ansprüche 1 bis 8.

11. Asphaltmasse, ausgewählt aus der Gruppe Asphaltbeton, Gussasphalt, Asphaltmastix, Sandasphalt und Splittmastixasphalt, umfassend eine Bitumenmasse nach einem der Ansprüche 1 bis 8.

12. Kaltmischgut, umfassend eine Bitumenmasse nach einem der Ansprüche 1 bis 8.

13. Additivkonzentrat, geeignet zur Herstellung einer Bitumenmasse nach einem der Ansprüche 1 bis 8, umfassend:
(a) mindestens ein tierisches und/oder pflanzliches Öl und/oder Fett und
(b) mindestens ein Wachs.

14. Additivkonzentrat nach Anspruch 13, zusätzlich umfassend eine oder mehrere Komponenten, ausgewählt aus der Gruppe, bestehend aus Haftvermittlern, Netzmitteln, Alterungsschutzmitteln, Fasern, armierenden Feinfüllern, Reaktionsbeschleunigern, Sikkativen, Vernetzungskatalysatoren, Korrosionsschutzadditiven und UV Stabilisatoren.
